# EUROPEAN PATENT APPLICATION

(11) **EP 1 521 199 A1**
(43) Date of publication of application: **06.04.2005**
(21) Application number: 04255463.4
(22) Date of filing: 09.09.2004
(51) Int. Cl.: G06F 17/60

(54) **Method and system for computer implemented management of assembly manufacture**

(30) Priority: 30.09.2003 US 675523
(71) Applicant: Hitachi Global Storage Technologies Netherlands B.V., 1076 AZ Amsterdam (NL)
(72) Inventor: Parker, James Frederick, San Benioto County, California 95023 (US); Nakashima, Takeshi, Kanagawa-ken 252-0035 (JP)
(74) Representative: Calderbank, Thomas Roger

(57) **Abstract**

A computer implemented method and system for management of assembly manufacturer. An experiential database is maintained, listing possible suppliers for each specified assembly component. After receiving responses to a Request for Quotation (RFQ) the database is augmented and the listed suppliers are hierarchically ranked according to multiple scoring parameters. A limited number of suppliers are then selected, based upon the hierarchical rankings, and those suppliers are invited to a bidder's conference. The identity of each supplier invited to the bidder's conference is published to encourage competitive pricing and a final price for each specified assembly component is then negotiated utilizing the bidder's conference format.

## Description

The present invention relates in general to improved computer implemented management of assembly manufacture and in particular to a method and system for efficiently selecting a supplier for each specified assembly component within the assembly manufacture. Still more particularly, the present invention relates to a method and system for efficiently negotiating a price for each specified assembly component.

Computer implemented manufacturing processes are well known in the art. Processes which automatically control the ordering of supplies from existing suppliers, the operation of manufacturing machines or assembly lines and the automated packaging or shipping of products are well known in the manufacturing arena.

The ability of computer programs to control the mundane activities associated with the manufacturing process should not be dismissed; however, the application of computer based processes to other aspects of the manufacturing process has not been exploited to a great extent.

Consequently, it should be clear that an area exists for methods and systems for applying computer implemented processes to all aspects of the manufacturing process.

It is therefore one object of the present invention to provide for improved computer implemented management of assembly manufacture.

It is another object of the present invention to provide an improved method and system for efficiently selecting a supplier for each specified assembly component within an assembly manufacture.

It is yet another object of the present invention to provide an improved method and system for efficiently negotiating a price for each specified assembly component.

The foregoing objects are achieved as is now described. A computer implemented method and system are disclosed for management of assembly manufacture. An experiential database is maintained, listing possible suppliers for each specified assembly component. After receiving responses to a Request for Quotation (RFQ) the database is augmented and the listed suppliers are hierarchically ranked according to multiple scoring parameters. A limited number of suppliers are then selected, based upon the hierarchical rankings, and those suppliers are invited to a bidder's conference. The identity of each supplier invited to the bidder's conference is published to encourage competitive pricing and a final price for each specified assembly component is then negotiated utilizing the bidder's conference format.

The novel features believed to be characteristic of the invention are set forth in the appended claims. The present invention itself, however, as well as a preferred mode of use, further objectives, and advantages thereof, will best be understood by reference to the following detailed description of a preferred embodiment when read in conjunction with the accompanying drawings, wherein:

Fig 1 is a schematic representation of a manufacturing process utilizing the method and system of the present invention; and

Fig 2 is a high level logic flow chart illustrating the computer implemented process of the present invention.

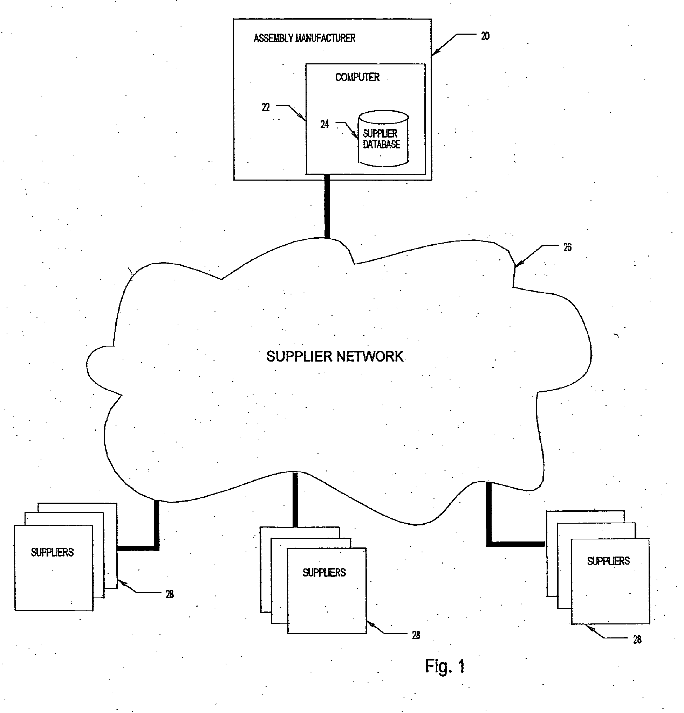

With reference now to the figures and in particular with reference to **Figure 1** there is depicted a schematic representation of a manufacturing process utilizing the method and system of the present invention. As illustrated, an assembly manufacturer **20** is depicted. In conjunction with assembly manufacturer **20** there is illustrated computer **22** which may be utilized to implement the method and system for computer implementation of assembly manufacture in accordance with the present invention. Depicted within computer **22** is supplier database **24**. As will be explained in greater detail herein, supplier database **24** may be created experientially based upon previous attempts at manufacturing a particular assembly and further, supplier database **24** may be subdivided based upon particular components within the assembly.

For example, utilizing the manufacture of hard disk drive storage devices, those having ordinary skill in the art will appreciate that multiple components may be involved. For example, mechanical components including spindle motors, carriages, cables, bases, covers, pivots, suspensions, or other mechanical devices may be involved. Additionally, components obtained from outside sources such as disk substrates, media, slider-wafers and/or sliders are also involved in the manufacture of hard disk drive storage components. Finally, electronic components may also be involved including printed circuit boards, electronic components or the like. Consequently, upon reference to the foregoing, those having ordinary skill in the art will appreciate that supplier database **24** may include an experientially derived list of suppliers for each of the components necessary to complete the manufacture of a particular assembly.

Still referring to **Figure 1,** it may be noted that assembly manufacturer **20** is coupled, either electronically or through other communication processes to supplier network **26**. Supplier network **26,** as those having ordinary skill in the art will appreciate, may comprise multiple suppliers **28.** Certain suppliers **28** within supplier network **26** may be known to assembly manufacturer **20** while other suppliers, notably new entrants into the field may be unknown to assembly manufacturer **20** at the beginning of the process described herein.

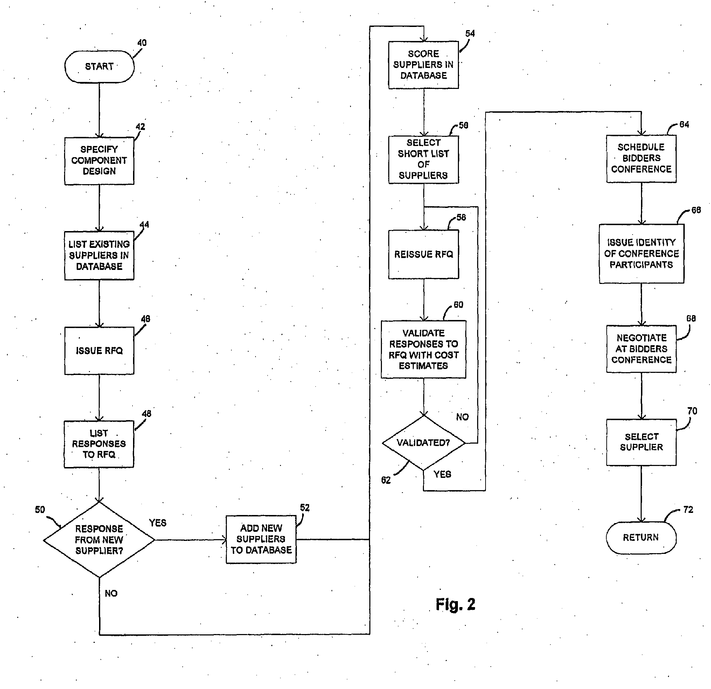

Referring now to **Figure 2,** there is depicted a high level logic flow chart which illustrates the computer implemented process of the present invention. As illustrated, this process begins at block **40** and thereafter passes to block **42**. Block **42** depicts the specification of the component design. Component designs are specified by a Commodity Manager for a particular component and typically involve elements of design, cost engineering and pricing decisions.

Next, the process passes to block **44**. Block **44** illustrates the listing of all known existing suppliers within supplier database **24** (see **Figure 1**). Those having skill in the art will appreciate that the existing suppliers present within supplier database **24** are experientially derived by the Commodity Manager. The Commodity Manager is preferably knowledgeable concerning the supplier data for either the component in question or like components. To the extent possible, the Commodity Manager should also be aware of sales percentages, programs supported, migration plans, technology transitions and other facets in which these existing suppliers may be involved.

Next, the process passes to block **46.** Block **46** illustrates the initial issuance of a Request for Quotation (RFQ) which, for each component within the assembly, whether mechanical, technological or electronic, will be issued to the largest possible distribution within the supplier network. In this manner, the initial Request for Quotation will receive consideration by those current suppliers within the database, plus a sufficient number of representatives from competitive or emerging vendors for the particular component in question.

At this point the process passes to block **48**, which illustrates the listing or cataloging of all responses received to the Request for Quotation (RFQ). Thus, each supplier bidding to supply a particular or specified component within the assembly will have submitted a response to the initial Request for Quotation (RFQ) and these responses, if considered valid, will be listed as designated at block **48.**

Next, the process passes to block **50**. Block **50** illustrates a determination of whether or not any of the valid responses received to a Request for Quotation (RFQ) is a response from a new or emerging supplier. If a response has been received from a new or emerging supplier the process passes to block **52**. Block **52** illustrates the adding of the new supplier to the supplier database **24** (see **Figure 1**) and thereafter, the process passes to block **54**. Still referring to block **50**, in the event no response from a new supplier has been received, the process also passes to block **54**.

Block **54** illustrates the scoring of all suppliers within supplier database **24** (see **Figure 1)** for a particular component. Those having skill in this art will, upon reference to the present specification, appreciate that multiple parameters may be selected for scoring each particular supplier within supplier database **24**. For example, the business operations of each supplier may be issued a numerical grade based upon any criteria which evaluates such parameters. Previous business experience with a particular supplier may also be utilized to score the response from a particular supplier. Similarly, the confidence of the assembly manufacturer in the pricing of a particular supplier within supplier database **24**, may also be utilized to score each supplier.

Those having ordinary skill in the art will appreciate that, for example, previous experience with a particular supplier wherein the initially quoted price was substantially altered during the process will result in a lower than nominal price confidence score for that particular supplier.

Additionally, manufacturing and/or development performance by each particular supplier within supplier database **24** (see **Figure 1**) may also be utilized to score each supplier within the database. In this manner, each supplier within supplier database **24** may be scored utilizing multiple parameters and all suppliers may then be hierarchically ranked from that supplier exhibiting the highest level of responsiveness and confidence to those suppliers exhibiting the least level of responsiveness and confidence.

At this point, the process passes to block **56**. Block **56** illustrates the selecting of a "short list" of suppliers utilizing the hierarchical ranking described above. Thus, those suppliers exhibiting the highest level of responsiveness and confidence will be present on the so-called "short list" for further consideration within the process of the present invention. In a preferred embodiment of the present invention, at least three suppliers are selected for inclusion on the "short list" of suppliers.

Next, the process passes to block **58**. Block **58** illustrates the reissue of a Request for Quotation (RFQ) which preferably includes all required prints and specifications. This reissued Request for Quotation (RFQ) will serve as the basis for sourcing decisions on individual components and so it is imperative that all requirements of the competitive bid process are followed closely.

Next, the process passes to block **60.** Block **60** illustrates a validation of all responses to the reissued Request for Quotation (RFQ) with cost estimates which have been developed by a cost engineering team working jointly with the Commodity Manager and the development team. The cost estimates are typically developed utilizing a combination of existing cost data, quotation data and cost estimating procedures which may be utilized to generate a cost proposal for selected parts and components within the assembly.

Cost estimates developed utilizing this process should be aggressive; however, such cost estimates should also be achievable and should be developed from a process routing which includes times, rates and process stages that may be utilized as a basis for discussion with potential suppliers for particular parts or components.

Thereafter, the process passes to block **62**. Block **62** illustrates a determination of whether or not the responses to the reissued Request for Quotation (RFQ) have been validated and if not, the process returns, in an iterative fashion, to block **58** where a Request for Quotation (RFQ) is once again reissued. This process continues until at least one response to a Request for Quotation (RFQ) has been received which has been validated against cost estimates. Still referring to block **62**, in the event one or more responses to the reissued Request for Quotation (RFQ) has been validated, the process passes to block **64**. Block **64** illustrates the scheduling of a bidder's conference. A "bidder's conference" has been determined by the present inventors to be highly effective in obtaining the best overall cost for each component within an assembly. Bidder's conferences are preferably a series of one on one meetings held over several days beginning with a "Idckoff' session where all suppliers attend.

As part of this bidder's conference process, the identity of each conference participant is published to all conference participates as depicted at block **66**. Thus, each supplier present at the bidder's conference will have knowledge of all competitive suppliers currently bidding to provide a particular component. Experience has determined that this process is likely to result in a most efficient determination of pricing for particular components and assemblies.

Next, the process passes to block **68**. Block **68** illustrates the negotiation of final price at the bidder's conference. As described above, the bidder's conference is typically a series of meetings held over several days wherein each supplier goes through negotiation with a team comprised of representatives from the Commodity Manager, cost engineering and development to finalize costs and technical quotation submissions for a particular assembly component. These meetings are typically conducted in a one-on-one manner wherein negotiations with each individual supplier take place during the bidder's conference.

Next, as depicted at block **70**, a supplier for a particular component is selected. As part of this process the selection of a source for a particular component has preferably been validated by the Commodity Manager, cost engineering, and development and all parties should be in agreement as to the final source chosen for each component. Further, sourcing decisions for each commodity may be subject to review and approval by a Commodity Counsel which provides a management review of sourcing decisions made by sourcing teams in order to assure continuity and consistency of sourcing activity across all programs. Thereafter, the process passes to block **72** and returns.

Those having ordinary skill in the art will appreciate that, as described herein, the present process permits the highly efficient determination of the best possible cost and supply source for each component within an assembly manufacturer utilizing computer implemented processes which are highly efficient in nature.

## Claims

1. A method for computer implemented management of assembly manufacturer, said method comprising the steps of:
maintaining a database listing possible suppliers for a specified assembly component;
hierarchically ranking said possible suppliers within said database utilizing a plurality of scoring parameters;
automatically selecting a limited number of possible suppliers based upon said hierarchical rankings;
issuing an invitation to a bidders conference to each of said limited number of possible suppliers;
thereafter, specifying to each of said limited number of possible suppliers an identity of all of said limited number of possible suppliers; and
negotiating a final price and selecting a designated supplier for said specified assembly component following said bidders conference.

2. The method for computer implemented management of assembly manufacturer according to claim 1 wherein said step of hierarchically ranking said possible suppliers within said database using a plurality of scoring parameters includes the step of hierarchically ranking said possible suppliers based in part upon previous business experience with each possible supplier.

3. The method for computer implemented management of assembly manufacturer according to claim 1 wherein said step of hierarchically ranking said possible suppliers within said database using a plurality of scoring parameters includes the step of hierarchically ranking said possible suppliers based in part upon confidence in stated pricing for each possible supplier.

4. The method for computer implemented management of assembly manufacturer according to claim 1 wherein said step of hierarchically ranking said possible suppliers within said database using a plurality of scoring parameters includes the step of hierarchically ranking said possible suppliers based in part upon demonstrated manufacturing performance for each possible supplier.

5. The method for computer implemented management of assembly manufacturer according to claim 1 wherein the step of automatically selecting a limited number of possible suppliers based upon said hierarchical ranking comprises the step of selecting at least a top three hierarchically ranked possible suppliers.

6. The method for computer implemented management of assembly manufacturer according to claim 1 further including the step issuing a Request for Quotation (RFQ) for said specified assembly component prior to hierarchically ranking said possible suppliers within said database utilizing a plurality of scoring parameters.

7. The method for computer implemented management of assembly manufacturer according to claim 6 further including the step of reissuing said Request for Quotation (RFQ) for said specified assembly component after automatically selecting a limited number of possible suppliers based upon said hierarchical rankings.

8. The method for computer implemented management of assembly manufacturer according to claim 7 further including the step validating responses received to said reissued Request for Quotation (RFQ) utilizing cost estimates.

9. A computer system for managing assembly manufacturer, said computer system comprising:
a database listing possible suppliers for a specified assembly component;
means for hierarchically ranking said possible suppliers within said database utilizing a plurality of scoring parameters;
means for automatically selecting a limited number of possible suppliers based upon said hierarchical rankings;
means for issuing an invitation to a bidder's conference to each of said limited number of possible suppliers; and
means for thereafter specifying to each of said limited number of possible suppliers an identity of all of said limited number of possible suppliers.
